# EUROPEAN PATENT APPLICATION

(11) **EP 2 003 000 A1**
(43) Date of publication of application: **17.12.2008**
(21) Application number: 08157853.6
(22) Date of filing: 09.06.2008
(51) Int. Cl.: B60G 9/00

(54) **Method of modifying a rear wheel suspension of a vehicle to an air suspension system.**

(30) Priority: 14.06.2007 SE 0701501
(71) Applicant: Prototyp Center-KV AB, 370 11 Backaryd (SE)
(72) Inventor: Urbanusson, Ingvar, 370 11 BACKARYD (SE)
(74) Representative: Hjalmarsson, Magnus Axel

(57) **Abstract**

The invention concerns a method of modifying a rear wheel suspension of a road vehicle, said rear wheel suspension comprising a rigid wheel axle, which is suspended on the vehicle by means of two leaf springs, on which the rigid wheel axle is attached at an axle attachment point (1') each. The method comprises the steps of, on either side of the vehicle, detaching the rigid wheel axle, cutting off the leaf spring (1) at a distance behind said axle attachment point (1'), mounting a lever arm mount (10) on the vehicle above said axle attachment point (1'), attaching a wheel holder (20) at said axle attachment point (1'), the wheel holder (20) being rigidly connected to a first end of a lever arm (21), which is pointing transversely across the vehicle against an opposite side thereof, hingedly connecting a second end (21') of the lever arm (21) to the lever arm mount (10) on the opposite side of the vehicle, arranging an air spring (30) between the wheel holder (20) and the vehicle, and adjusting wheel angles of the rear wheel suspension thus modified and/or a wheel track thereof by displacing the wheel holder (20) on the leaf spring (1) and/or by displacing the second end (21') of the transverse lever arm (21) in relation to the remainder thereof and/or in relation to the lever arm mount (10). The invention also concerns an air suspended road vehicle with a rear axle assembly comprising transverse lever arms (21) according to the above.

## Description

### Technical Field

The present invention concerns a method of modifying a rear wheel suspension of a road vehicle, said rear wheel suspension comprising a rigid wheel axle, which has two opposing ends with wheel shafts and is suspended on the vehicle by means of two leaf springs, which run lengthwise of the vehicle on both sides thereof and in parallel with each other between front and rear leaf spring mounts and on which the rigid wheel axle is attached at an axle attachment point each.

The invention also concerns an air suspended road vehicle for transportation purposes, where lowering of a rear part of the vehicle is desirable, said vehicle having a rear axle assembly, which on each side of the vehicle comprises a wheel holder with a wheel shaft for a vehicle wheel, a lever arm extending lengthwise from said wheel holder in a forward direction of the vehicle, said lever arm being rigidly connected to the wheel holder and being in front thereof hinged onto a chassis of the vehicle, and an air spring, which is provided between the wheel holder and said chassis of the vehicle and is deflatable for lowering of the rear part of the vehicle.

### Prior Art

In the document WO 01/87649 A1 a method according to the preamble is disclosed, said method concerning modifying of a rear wheel suspension of a road vehicle. In the known method the original rigid rear axle with its leaf springs is replaced by a divided rear axle assembly comprising two longitudinal swing arms. These cooperate in a flexible way with an air spring and a shock absorber each.

The known solution has several drawbacks. A first one is that the longitudinal swing arms are relatively expensive, because the possibility to reuse original parts is very limited. Second, the longitudinal swing arms provide for no other wheel alignment possibilities than the ones which are at hand when mounting the swing arms onto the vehicle. Third, the ride quality of the vehicle with the swing arm solution chosen is not very favourable, because the swing arms when flexing show a static movement pattern.

### Object of the Invention

In the light of the above a first object of the invention is to improve the previously known method in such a way, that a modification of the rear wheel suspension of the vehicle is rendered possible requiring fewer new parts than before and thus leading to a vehicle, which more resembles the original factory proven one and furthermore gives much more forgiving road manners thanks to an improved axle geometry. In the light of the above a second object of the invention is to provide an air suspended road vehicle, which renders possible lowering of the rear of the vehicle to a very low and thus entrance friendly level and gives rise to forgiving road manners and high ride comfort.

### Short Summary of the Invention

According to the invention the first object is achieved by means of a method according to the preamble, the method being characterised by the steps of, on either side of the vehicle, detaching the rigid wheel axle from its axle attachment point on the leaf spring, cutting off the leaf spring at a distance behind said axle attachment point, removing a cut-off rear part of the leaf spring from the vehicle, mounting a lever arm mount on the vehicle above said axle attachment point on a remaining part of the leaf spring, attaching a wheel holder with a wheel shaft at said axle attachment point, the wheel holder being rigidly connected to a first end of a lever arm, which is pointing transversely across the vehicle against an opposite side thereof, hingedly connecting a second end of the lever arm to the lever arm mount on the opposite side of the vehicle, arranging an air spring between the wheel holder and the vehicle, and adjusting wheel angles of the rear wheel suspension thus modified and/or a wheel track thereof by changing placement of the wheel holder on the leaf spring and/or by moving of the second end of the transverse lever arm in relation to the remainder thereof and/or by in relation to the lever arm mount on the opposite side of the vehicle.

By keeping a part of the originally mounted leaf spring of the road vehicle on each side thereof, a rear wheel suspension is provided, in which the structural element being stressed the most during ride, i.e. the front part of the original leaf spring, is kept intact. This means that it is possible for the converted rear wheel suspension to profit by the proven physical properties of the original and thus to provide for the safety necessary for a road vehicle in a relatively simple way. Furthermore, by combining the leaf spring part with a long transverse lever arm, which stabilizes the leaf spring part sideways and gives rise only to minor track and wheel angle changes when flexing during ride, a rear wheel suspension is provided able to fulfil even high set demands on driving safety and comfort. In addition to that, the axle geometry chosen leads to the wheels, when the back of the vehicle is lowered in order to facilitate entrance, being tilted somewhat inwards in a very favourable way from their vertical ride position towards the vehicle, such that they without risk of colliding with any part inside of the wheel housings can be inserted very far into these. Finally the built-in adjustability of the leaf spring part and of the second end of the transverse lever arm render it possible to adjust the wheel angles and the track of the modified rear wheel suspension in a very favourable way.

In the method according to the invention the step of detaching the rigid wheel axle preferably comprises too the step of detaching wheel shafts of the rigid wheel axle in order to use them on the wheel holders of the modified rear wheel suspension. The advantage of this solution is that one can make use of further proven original parts in a safety enhancing as well as cost saving manner.

Preferably the step of removing the cut-off rear part of the leaf spring also comprises the step of detaching a rubber sleeve in a lug on said part in order to use this rubber sleeve in a corresponding lug on the second end of the transverse lever arm. There are of course safety and cost aspects to this solution too, but there is also the thought of facilitating future spare part acquisition for a vehicle user.

The step of attaching the wheel holder preferably comprises too bolting thereof by means of U-bolts, which before were used for attachment of the rigid wheel axle on the leaf spring. It is evident that this solution is favourable from a safety and cost related point of view.

Preferably the step of adjusting the second end of the transverse lever arm in relation to the remainder thereof and/or in relation to the lever arm mount on the opposite side of the vehicle comprises the step of adjusting a position of height of said end in relation to the remainder of the transverse lever arm by means of a toggle joint, which forms part of the lever arm and allows lockable rotation of said end about a horizontal shaft extending transversely of the lever arm, and/or the step of adjusting a distance of said end from the remainder of the transverse lever arm by means of an adjustment bolt, which forms part of said toggle joint, and/or the step of adjusting a position of said end in relation to the vehicle by displacing said end on the lever arm mount in a lengthwise direction of the vehicle. The advantage of the adjustment method described is that it provides for easy adjustment of all the wheel angles at hand as well as of the wheel track (and in that way naturally also of the front and rear of the vehicle in relation to each other).

The displacement of said end in a lengthwise direction of the vehicle preferably comprises displacing along a swivel pin and position locking on said swivel pin in a lengthwise direction of the vehicle by means of shims on said pin. It is evident that this solution too is straightforward and rugged.

The step of arranging an air spring between the wheel holder and the vehicle preferably comprises arranging a support plate between the vehicle and said air spring, wherein the lever arm mount is provided on said support plate. Thanks to this support plate, suitably adapted to the configuration of the vehicle chassis, forces caused by the air spring and the lever arm are well distributed to said chassis, and additionally a very assembly friendly solution is achieved.

Preferably the step of arranging a support plate further comprises providing a shock absorber between said support plate and the wheel holder underneath. This too serves to evenly distribute arising forces and to provide for assembly friendliness.

The air suspended vehicle according to the invention is characterised in that the wheel holder comprises a bottom plate, from which the lengthwise extending arm projects and onto which the air spring is provided, and that a transverse lever arm extends from the wheel holder towards an opposite side of the vehicle, the transverse lever arm having a first end, which is rigidly connected to the wheel holder, and a second end, which is hinged onto the chassis of the vehicle close to the air spring on the opposite side of the vehicle.

Thanks to the invention an axle geometry is created giving high driving quality and making it possible to lower the back of the vehicle to extremely low levels.

Preferably the transverse lever arm at its second end has a toggle joint, which is rotatable about a shaft extending in a lengthwise direction of the vehicle and lockable by means of set bolts. This solution allows easy adjustment of camber angles of the rear axle and thus contributes to high driving quality and a minimum tyre wear.

Preferably the toggle joint comprises an adjustment bolt, which is essentially aligned with the transverse lever arm and allows adjustment of a distance of the second end from the wheel holder. This makes it easy to adjust an overall track of the rear axle as well as an individual position of each rear wheel in a sidewise direction of the vehicle.

According to an embodiment of the invention the lengthwise extending lever arm forms part of a cut-off leaf spring, on which said bottom plate is attached by means of U-bolts from a previous axle mount on the cut-off leaf spring. This embodiment is to be found especially in converted vehicles, which initially had a rigid rear axle suspended by means of two parallel leaf springs extending in a lengthwise direction of the vehicle, and thus it represents a relatively cheap solution for an air suspended road vehicle for transportation purposes.

Against the same background is to be seen another embodiment of a road vehicle according to the invention, wherein the transverse lever arm at its second end has a lug, in which a rubber sleeve is inserted, said sleeve being taken from a corresponding lug of a cut-off part of said leaf spring.

### Short Description of the Drawings

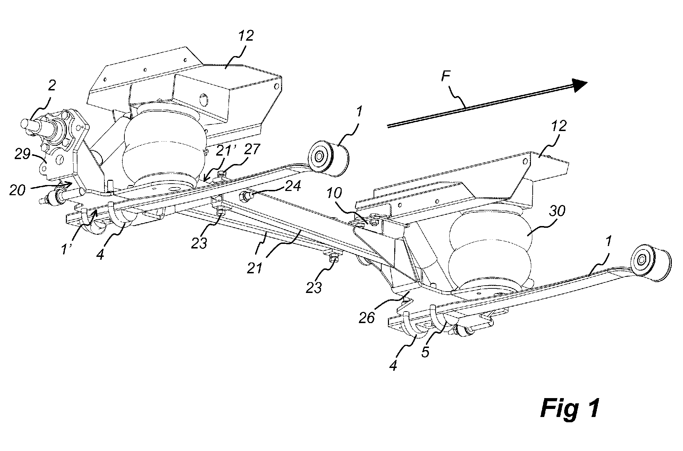

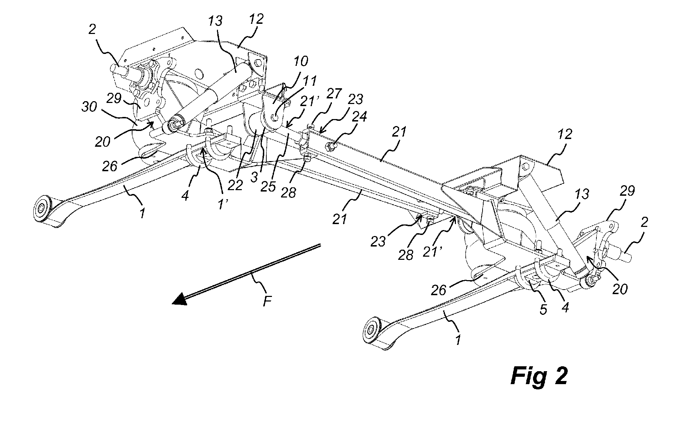

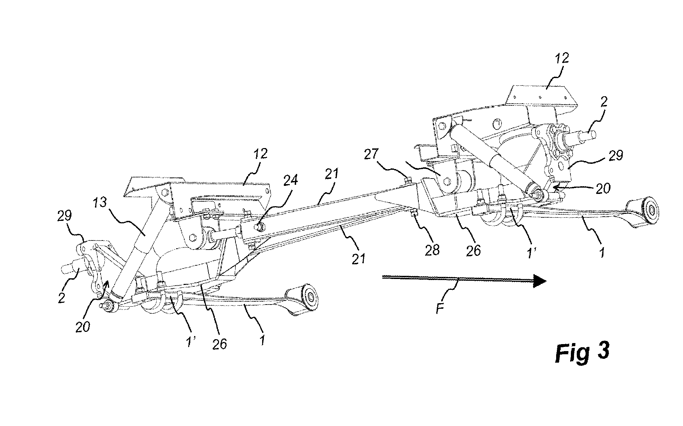

A preferred embodiment of the method according to the invention is shown in the appendant drawings, wherein Figs. 1-3 in three different perspective views from underneath show a rear wheel suspension made pursuant to the method according to the invention.

### Description of a Preferred Embodiment

The rear wheel suspension or rear axle assembly shown in the drawings is meant for an air suspended road vehicle (not shown) for transportation purposes, where lowering of the back of the vehicle is desirable. To be precise, the kind of vehicle in question comprises light transport buses, which are configured for instance for nine people and are used especially for driving disabled people. For such driving, it is obvious that the lowering of the back of the vehicle serves to facilitate entrance for the disabled and that it is of course associated with a lifting of the back of the vehicle to a normal driving level as soon as every one is seated.

Besides the lowering possibility a wheel suspension with air springs offers a superior riding comfort compared to e.g. a leaf spring suspension, wherein it is evident that the air springs described within the context of the invention may well comprise other kinds of suspension means allowing height adjustment and including a gas filled chamber. Thus, in other words in the context at hand the expression air spring has to be interpreted as a gas filled suspension element having height adjustment properties.

The method according to the invention comprises the following steps in order to build the rear wheel suspension shown in the drawings:

In a road vehicle having a rigid rear axle, which at its opposite ends has wheel shafts and is suspended on the vehicle by means of two leaf springs 1, which run lengthwise of the vehicle on both sides thereof and in parallel with each other between front and rear leaf spring mounts and on which the rigid wheel axle is attached at an axle attachment point 1' each, in a first step the rigid rear axle is detached from its axle attachment points 1' on the leaf springs 1 and existing shock absorbers are detached as well. After this the leaf springs 1 are cut off at a distance behind the axle attachment points 1', and the cut-off rear parts of the leaf springs 1 are removed from the vehicle. Further, for later use the wheel shafts 2 are detached from the rear axle as well as rubber sleeves 3 in lugs of the cut-off rear parts of the leaf springs.

The next step comprises welding of two wheel holders 20. They each comprise a bottom plate 26, from which a transverse lever arm 21 and a wheel shaft holder 29 protrude. On the wheel shaft holders 29 said wheel shafts 2 are mounted, and underneath the bottom plates 26 the remaining parts of the leaf springs 1 are bolted approximately at the same axle attachment points 1' as the rigid rear axle before, wherein the bolting is done by means of the same U-bolts that were used before for attachment of the rigid rear axle onto the leaf springs 1.

It is obvious that when bolting the leaf springs 1 onto the bottom plates it is important to ensure that the joint between them gets stable and can withstand high loads. Therefore it may be wise to install some kind of spacer, e.g. made of rubber, between the bottom plates 26 and the leaf springs 1, said spacers damping possible noise from suspension moves, and to insert rounded support blocks 5 between the U-bolts 4 and the leaf springs 1, said support blocks possibly too been taken from the original rear wheel suspension.

The transverse lever arms 21 each have a second end 21' opposite to the attachment point at each bottom plate. The second end comprises a toggle joint 23, which is rotatable about a shaft 24 extending along the vehicle (c.f. the arrow F pointing towards the front of the vehicle) and is lockable by means of set bolts 27, 28. The toggle joint 23 also comprises an adjustment bolt 25, that essentially is aligned with the transverse lever arm 21 and allows adjustment of the distance of the second end 21' from the bottom plate 26. The adjustment bolt 25 has at its outer end a lug 22, in which the left over rubber sleeve 3 mentioned above is mounted.

The next step comprises mounting of support plates 12 onto the chassis of the vehicle, said support plates 12 having a shape well adapted to said chassis and extending from wheel housings of the vehicle a distance inwards over frame members inside thereof. Lever arm mounts 10 are attached to the support plates 12 above said axle attachment points 1' on the remaining parts of the leaf springs 1 and underneath of said frame members. Each lever arm mount 10 has an inverted U-shape, and in the U-flanges there are orifices for a swivel pin 11 extending along the vehicle.

By means of the swivel pins 11 the transverse lever arms 21 with their lugs 22 are now connected hingedly to the lever arm mounts 10, to be more precise to the lever arm mount 10 on the side of the vehicle opposite to the bottom plate 26 from which the lever arm 21 protrudes.

In a final assembly step air springs 30 are installed between the bottom plates 26 of the wheel holders 20 and the support plates 12 on the vehicle, and furthermore shock absorbers 13 are mounted between the bottom plates 26 and the support plates 12.

The method according to the invention of modifying a rear wheel suspension also comprises wheel alignment as a very important aspect. For such wheel alignment one uses the possibilities provided by the modified rear wheel suspension in the following way.

The remaining parts of the leaf springs 1 have in front the same attachment points as before on the vehicle chassis and are used as a fixed starting point. Where the leaf springs 1 are attached to the bottom plate 26 by means of the U-bolts 4, there is a certain possibility to perform side displacement (turning) within the limits given by the U-bolts. (In the longitudinal direction the position is locked e.g. by means of a pin, which is not shown.) The side displacement possible is primarily used for coarse adjustment and is provided for use mainly in connection with modifying and not for wheel alignment later on during active life of the vehicle.

After said coarse adjustment, precision adjustment is performed at the second end 21' of the transverse lever arms 21, i.e. the end distal to the bottom plate 26. There the toggle joints 23 as a first alternative provide the possibility to adjust the camber angle of the wheel connected to the respective lever arm 21. This is done by lifting and lowering of the lugs 22 at the ends 21' of the lever arms 21 by rotating the toggle joints 23 about the shafts 24, with run along the vehicle, the rotation being controlled and stopped by tightening and loosening of the set bolts 27, 28.

A second adjustment alternative, also provided by the toggle joints 23, comprises individual adjustment of the track of the wheel connected to the respective lever arm 21. This is done by tightening and loosening of the adjustment bolts 25, which leads to an altering of the distance of the lugs 22 at the ends of these bolts 25 in relation to the bottom plates 26, with which the lever arms 21 are connected, i.e. technically leads to a length alteration of the lever arms 21. It is evident that the individual track adjustment can be used for alignment of the rear wheels of the modified vehicle with the front wheels thereof, such that the wheels run behind each other in a suitable way, as well as for an optimum choice of track width in view of a corresponding optimum lowering of the back of the vehicle without the wheels hitting any parts inside of the wheel housings.

A third adjustment alternative, also provided by the toggle joints 23, comprises individual adjustment of toe of the wheel connected to the respective lever arm 21. This too is done by tightening and loosening of the bolts 25, which by the way when all of the adjustments have been done are locked e.g. by means of a locking nut.

A forth adjustment alternative does also concern adjustment of toe, but it is performed in another way than before. For the alternate and additional adjustment of toe, e.g. after a track correction, it is possible to displace the lugs 22 on the swivel pins 11 along the vehicle. This leads to turning of the leaf springs 1 in their original front mounts about an essentially vertical axis and thus to a desired adjustment of toe. The displacement on the swivel shafts 11 is controlled and limited by means of shims (not shown), which in different numbers can be placed on the swivel shafts 11 in front of and/or behind the lugs 22, wherein the shims proximate to the lugs 22 abut the rubber sleeves 3 therein and the shims distal to the lugs 22 abut the U-flanges of the lever arm mounts 10.

It is obvious that the embodiment described can be varied in different ways within the scope of the patent claims. It is obvious too that it can be fitting to install an anti-roll bar (not shown), which acts upon the rear ends of the leaf springs 1, and to install a damping means, such as a so called steering damper, which acts between the transverse lever arms 21 in order to control the suspension frequency.

Further it is obvious that a close description of an embodiment of a road vehicle according to the invention mainly would consist of a tedious repeating of the foregoing. However, it should be observed that a road vehicle built in accordance with to the invention does not need to have longitudinal lever arms made of cut-off leaf springs 1, but instead can comprise longitudinal lever arms e.g. in the shape of tubes, which can be welded to the wheel holders 20.

## Claims

1. Method of modifying a rear wheel suspension of a road vehicle, said rear wheel suspension comprising a rigid wheel axle, which has two opposing ends with wheel shafts and is suspended on the vehicle by means of two leaf springs (1), which run lengthwise of the vehicle on both sides thereof and in parallel with each other between front and rear leaf spring mounts and on which the rigid wheel axle is attached at an axle attachment point (1') each, **charcterised by** the steps of, on either side of the vehicle,
detaching the rigid wheel axle from its axle attachment point (1') on the leaf spring (1),
cutting off the leaf spring (1) at a distance behind said axle attachment point (1'),
removing a cut-off rear part of the leaf spring (1) from the vehicle,
mounting a lever arm mount (10) on the vehicle above said axle attachment point (1') on a remaining part of the leaf spring (1),
attaching a wheel holder (20) with a wheel shaft (2) at said axle attachment point (1'), the wheel holder (20) being rigidly connected to a first end of a lever arm (21), which is pointing transversely across the vehicle against an opposite side thereof,
hingedly connecting a second end (21') of the lever arm (21) to the lever arm mount (10) on the opposite side of the vehicle,
arranging an air spring (30) between the wheel holder (20) and the vehicle, and
adjusting wheel angles of the rear wheel suspension thus modified and/or a wheel track thereof by changing placement of the wheel holder (20) on the leaf spring (1) and/or by moving of the second end (21') of the transverse lever arm (21) in relation to the remainder thereof and/or by in relation to the lever arm mount (10) on the opposite side of the vehicle.

2. Method according to claim 1, wherein the step of detaching the rigid wheel axle also comprises the step of detaching wheel shafts (2) of the rigid wheel axle in order to use them on the wheel holders (20) of the modified rear wheel suspension.

3. Method according to claim 1 or 2, wherein the step of removing the cut-off rear part of the leaf spring also comprises the step of detaching a rubber sleeve (3) in a lug on said part in order to use this rubber sleeve (3) in a corresponding lug (22) on the second end (21') of the transverse lever arm (21).

4. Method according to any one of claims 1-3, wherein the step of attaching the wheel holder (20) comprises bolting thereof by means of U-bolts (4), which before were used for attachment of the rigid wheel axle on the leaf spring.

5. Method according to any one of claims 1-4, wherein the step of adjusting the second end (21') of the transverse lever arm (21) in relation to the remainder thereof and/or in relation to the lever arm mount (10) on the opposite side of the vehicle comprises the step of adjusting a position of height of said end (21') in relation to the remainder of the transverse lever arm (21) by means of a toggle joint (23), which forms part of the lever arm (21) and allows lockable rotation of said end (21') about a horizontal shaft (24) extending transversely of the lever arm (21), and/or the step of adjusting a distance of said end (21) from the remainder of the transverse lever arm (21) by means of an adjustment bolt (25), which forms part of said toggle joint (23), and/or the step of adjusting a position of said end (21') in relation to the vehicle by displacing said end (21') on the lever arm mount (10) in a lengthwise direction of the vehicle.

6. Method according to claim 5, wherein displacing said end (21') in a lengthwise direction of the vehicle comprises displacing along a swivel pin (11) and position locking on said swivel pin (11) in a lengthwise direction of the vehicle by means of shims on said pin (11).

7. Method according to any one of the preceding claims, wherein the step of arranging an air spring (30) between the wheel holder (20) and the vehicle comprises arranging a support plate (12) between the vehicle and said air spring (30), wherein the lever arm mount (10) is provided on said support plate (12).

8. Method according to claim 7, wherein the step of arranging a support plate (12) further comprises providing a shock absorber (13) between said support plate (12) and the wheel holder (20) underneath.

9. Air suspended road vehicle for transportation purposes, where lowering of a rear part of the vehicle is desirable, said vehicle having a rear axle assembly, which on each side of the vehicle comprises a wheel holder (20) with a wheel shaft (2) for a vehicle wheel, a lever arm (1) extending lengthwise from said wheel holder (20) in a forward direction of the vehicle, said lever arm being rigidly connected to the wheel holder (20) and being in front thereof hinged onto a chassis of the vehicle, and an air spring (30), which is provided between the wheel holder (20) and said chassis of the vehicle and is deflatable for lowering of the rear part of the vehicle,
**characterised in**
**that** the wheel holder (20) comprises a bottom plate (26), from which the lengthwise extending arm (1) projects and onto which the air spring (30) is provided, and
**that** a transverse lever arm (21) extends from the wheel holder (20) towards an opposite side of the vehicle, the transverse lever arm having a first end, which is rigidly connected to the wheel holder (10), and a second end (21'), which is hinged onto the chassis of the vehicle close to the air spring (30) on the opposite side of the vehicle.

10. Vehicle according to claim 9, wherein the transverse lever arm (21) at its second end (21') has a toggle joint (23), which is rotatable about a shaft (24) extending in a lengthwise direction of the vehicle and lockable by means of set bolts (27, 28).

11. Vehicle according to claim 10, wherein the toggle joint (23) comprises an adjustment bolt (25), which is essentially aligned with the transverse lever arm (21) and allows adjustment of a distance of the second end (21') from the wheel holder (20).

12. Vehicle according to any one of claims 9-11, wherein the lengthwise extending lever arm (1) forms part of a cut-off leaf spring, on which said bottom plate (26) is attached by means of U-bolts (4) from a previous axle mount on the cut-off leaf spring.

13. Vehicle according to any one of claims 9-12, wherein the transverse lever arm (21) at its second end (21') has a lug (22), in which a rubber sleeve (3) is inserted, said sleeve being taken from a corresponding lug of a cut-off part of said leaf spring.
